Europäisches Patentamt

European Patent Office

Office européen des brevets

(11) Veröffentlichungsnummer: **0 489 277 A1**

# (12) EUROPÄISCHE PATENTANMELDUNG

(21) Anmeldenummer: **91119299.5**

(22) Anmeldetag: **13.11.91**

(51) Int. Cl.⁵: **B25D 17/00**, F16J 15/06, B25F 5/02

(30) Priorität: **04.12.90 DE 4038623**

(43) Veröffentlichungstag der Anmeldung:
**10.06.92 Patentblatt 92/24**

(84) Benannte Vertragsstaaten:
**CH DE FR GB IT LI**

(71) Anmelder: **ROBERT BOSCH GMBH**
**Postfach 30 02 20**
**W-7000 Stuttgart 30(DE)**

(72) Erfinder: **Faelchle, Jorg**
**Florianstrasse 2**
**W-7445 Bempflingen-Kleinbettling(DE)**

(54) **Handwerkzeugmaschine.**

(57) Für Bohrhämmer, die mit dünnflüssigem Fett geschmierte Getriebeteile aufweisen, wird eine montagesichere und zuverlässige Dichtung (20) vorgeschlagen. Diese besteht aus einem rahmenförmigen Dichtungsteil (21), an das einstückig zwei Dichtringe (22, 23) angeformt sind. Die Dichtringe (22, 23) umschließen indirekt über Lager (12) beziehungsweise Wellendichtringe (16) rotierende Wellen (2, 17). Die Dichtung (20) hat den Vorteil, daß sie durch ihre Formgestaltung Montagefehlern entgegenwirkt und eine lange Lebensdauer der Handwerkzeugmaschine sicherstellt.

FIG.1

## Stand der Technik

Die Erfindung geht aus von einer Handwerkzeugmaschine nach dem Oberbegriff des Anspruchs 1. Zur Abdichtung zweischaliger Handwerkzeugmaschinen sind bereits Dichtrahmen bekannt, die die Wellen an den Wellendurchbrüchen des Gehäuses einseitig umschließen. Auf der Gegenseite sind ähnlich des Dichtrings aus der DE-AS 14 00 490 halbkreisförmige Dichtringhälften eingelegt. Dies kann insbesondere bei nicht sorgfältig eingelegten oder wieder aus der Dichtungsfuge herausgefallenen Dichtringhälften zu radialen Spalten zwischen den Dichtungsteilen oder gar völlig fehlender Abdichtung an den Wellen führen. Die Lage der Dichtringhälften ist bei montiertem Hammer nicht mehr kontrollierbar. Es besteht dann die Gefahr des Eintritts von Schmiermittel in den Motorbereich. Besonders bei Bohrhämmern, deren Schlagwerke mit dünnflüssigem Fett geschmiert sind, ist eine solche Abdichtung unbefriedigend.

## Vorteile der Erfindung

Die erfindungsgemäße Handwerkzeugmaschine mit den kennzeichnenden Merkmalen des Anspruchs 1 hat demgegenüber den Vorteil, daß sowohl die Dichtwirkung der zwischen die Gehäusehälften einzusetzenden Dichtung verbessert als auch deren Montage einfacher und sicherer wird. Eine fehlerhafte Montage oder das Fehlen von Dichtungsbestandteilen kann praktisch nicht mehr auftreten.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, das rahmenförmige Dichtungsteil rundschnurförmig auszubilden. Dann kann die gesamte Dichtung nämlich in einer Ebene gespritzt werden. Zum Einbau werden dann die Dichtringe um 90° gedreht, also gegenüber dem Rahmen aufgestellt, um die in der Zeichnung gezeigte Form der Dichtung zu erhalten. Weiter vorteilhaft ist es, an den Dichtringen einen Bund als Anschlag für Wellendicht- oder Lagerringe anzuordnen, auf die die Dichtringe bei der Montage aufgeschoben werden können. Um die zweite Gehäuseschale leichter aufsetzen zu können, sind die Dichtringe am Umfang dachförmig.

## Zeichnung

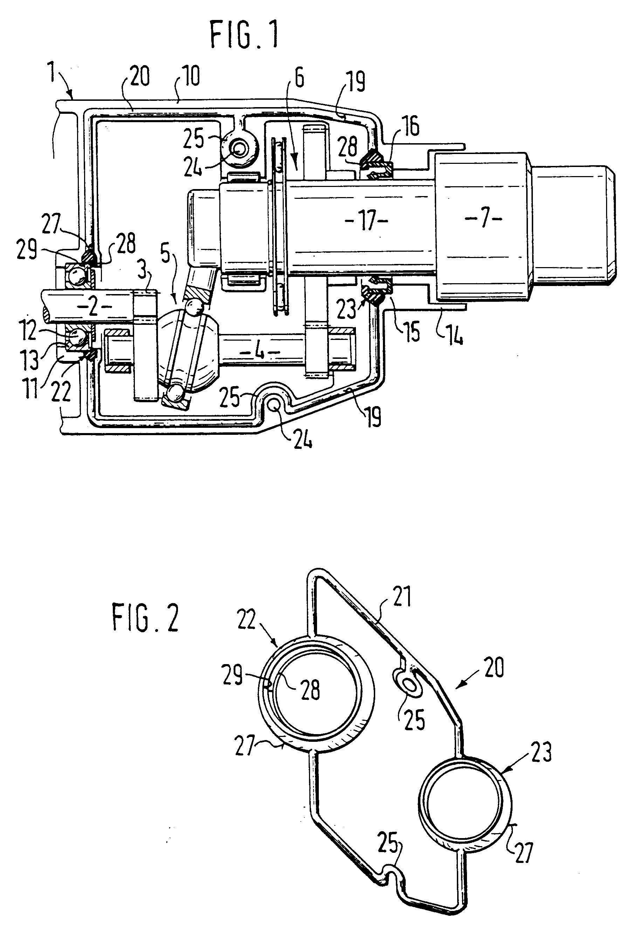

Ein Ausführungsbeispiel der Erfindung ist in der Zeichnung dargestellt und in der nachfolgenden Beschreibung näher erläutert. Figur 1 zeigt einen Schnitt durch einen Bohrhammer, Figur 2 zeigt eine perspektivische Ansicht einer Dichtung.

## Beschreibung des Ausführungsbeispiels

Die Bauweise und Funktion eines elektromotorisch betriebenen Bohrhammers ist allgemein z.B. aus der DE-OS 33 29 005 bekannt, deren Inhalt hiermit als offenbart gilt. Der Bohrhammer enthält in seinem Gehäuse 1 im wesentlichen einen nicht gezeigten Motor mit Abtriebswelle 2 und Ritzel 3, eine Zwischenwelle 4 mit Taumelgetriebe 5 und ein Schlagwerk 6. Diese teilweise aus Aluminium gefertigten und mit hohen Geschwindigkeiten bewegten Getriebeteile sind mit dünnflüssigem Fett geschmiert. An das Schlagwerk 6 schließt sich eine Werkzeugaufnahme 7 an, in die ein für den jeweiligen Anwendungszweck geeignetes Werkzeug einsetzbar ist. Die Getriebeteile 2 bis 6 sind in eine schalenförmige Gehäusehälfte 10 einlegbar. Zu diesem Zweck sind in die Gehäusehälfte 10 Lagerböcke eingegossen. Insbesondere ist dies ein erster Lagerbock 11 für ein Wälzlager 12, dessen Außenring 13 dort gehalten wird. In dem Lager 12 ist die Abtriebswelle 2 des Motors mit dem Ritzel 3 gelagert. Ein zweiter, am Hals 14 des Bohrhammers angeordneter Lagerbock 15 dient einem Wellendichtring 16 als Anlage. Der Wellendichtring 16 sitzt auf einem Hammerrrohr 17, das drehend angetrieben ist und in dem sich das Schlagwerk 6 befindet.

Die Gehäusehälfte 10 weist an ihrem Rand zwischen dem Wälzlager 12 und dem Wellendichtring 16 zwei Nuten 19 auf, in die eine Dichtung 20 einsetzbar ist.

Die in Figur 2 als Einzelteil gezeigte elastische Dichtung 20 ist ein einstückiges Spritzteil, das einen rahmenförmigen Dichtungsteil 21 mit kreisrundem Querschnitt und zwei geschlossene Dichtringe 22, 23 aufweist. Zur Abdichtung von Schraublöchern 24 im Gehäuse des Bohrhammers hat die Dichtung außerdem zwei Schlaufen 25, die ebenfalls in die Nuten 19 eindrückbar sind.

Die Dichtringe 22, 23 sind am Umfang dachförmig ausgebildet so daß die vordersten Kanten 27 leicht in die Nuten 19, insbesondere in entsprechend an der zweiten, nicht gezeigten Gehäusehälfte angeordneten Nuten eingeführt werden können. Die Dichtringe 22, 23 weisen weiter jeweils einen nach innen vorstehenden Bund 28 auf.

Die Dichtung wird vorteilhaft in einer Ebene gespritzt, das heißt die Spritzform ist so ausgebildet, daß das rahmenförmige Teil 21 und die Dichtringe 22, 23 in einer Ebene liegen. Beim Montieren der Dichtung 20 werden die rundschnurförmigen Abschnitte des Teils 21, die den Dichtringen 22, 23 benachbart sind, um ihre Achse so verdreht, daß die Dichtringe quer zum Teil 21 stehen, wie dies in Figur 2 gezeigt ist. Die Dichtwirkung wird dabei nicht beeinträchtigt, weil sich die äußere Form des rahmenförmigen Teils 21 nicht ändert.

Zur Montage des Bohrhammers wird zunächst der Dichtring 22 auf den Außenring 13 des Wälzlagers 12 geschoben, so daß der Lagerring 13 mit seiner Außenfläche an der Innenfläche 29 und dem Bund 28 des Dichrings 22 anliegt. Sodann wird der Motor mit seinem Lager 12 und der Dichtung 20 in die untere Gehäuseschale 10 eingelegt. Der zweite Dichtring 23 wird nun auf den Wellendichtring 16 aufgezogen, so daß dieser ebenfalls wieder an der Innenfläche 29 und dem Bund 28 dieses Dichtrings anliegt. Der Dichtring 23 wird sodann zusammen mit dem Hammerrohr 17 und dem darin befindlichen Schlagwerk 6 in die untere Gehäuseschale 10 eingelegt. Das rahmenförmige Dichtungsteil 21 wird nun ringsum in die Nut 19 eingedrückt. Anschließend wird noch die Zwischenwelle 4 mit dem Taumelgetriebe 5 in die untere Gehäuseschale 10 eingesetzt. Nachdem alle Innenteile in die untere Gehäuseschale 10 eingelegt worden sind, wird eine in ihren Konturen spiegelbildliche zweite Gehäuseschale aufgesetzt. Diese Gehäuseschale unterscheidet sich von der unteren dadurch, daß sie anstelle der Nut 19 eine Leiste aufweist, die gegen die Dichtung 20 gepreßt wird.

Das Ausführungsbeispiel zeigt eine besonders vorteilhafte Ausgestaltung der Erfindung. Dabei ist es nicht notwendig, daß die Dichtringe 22, 23 auf Wellendichtringe 16 oder Lagerringe 13 aufgesetzt werden. Zum Beispiel kann eine Dichtlippe auch direkt an den Dichtring 22, 23 angeformt sein. Wenn die Dichtringe 22, 23 nicht schnelldrehende Wellen, sondern passive oder sich nur langsam bewegende Bauteile abdichten sollen, so können diese auch direkt an der Welle anliegen.

**Patentansprüche**

1. Handwerkzeugmaschine mit einem zweischaligen Gehäuse (1, 10) und darin untergebrachten geschmierten Getriebeteilen (3 bis 6), wobei mindestens eine rotierende Welle (2, 17) das Gehäuse (2) durchdringt, und mit einer zwischen die Gehäusehälften (10) eingelegten Dichtung (20), die insbesondere in eine Nut (19) an einer der Gehäusehälften (10) eindrückbar ist, dadurch gekennzeichnet, daß die Dichtung (20) einstückig ist und mindestens einen geschlossenen Dichtring (22, 23) aufweist, der eine Welle (2, 17) direkt oder indirekt ohne Radialspalt umschließt.

2. Handwerkzeugmaschine nach Anspruch 1, dadurch gekennzeichnet, daß der oder die Dichtringe (22, 23) mit einem rahmenförmigen Dichtungsteil (21) verbunden sind, das rundschnurförmig ausgebildet ist.

3. Handwerkzeugmaschine nach Anspruch 1 oder 2, dadurch gekennzeichnet, daß der oder die Dichtringe (22, 23) auf den Wellen sitzende Wellendichtringe (16) oder Lagerringe (13) radial umschließen.

4. Handwerkzeugmaschine nach einem der vorhergehenden Ansprüche, dadurch gekennzeichnet, daß der oder die Dichtringe (22, 23) Bunde (28) aufweisen, die axial an Wellendichtringen (16) oder Lagerringen (13) anliegen.

5. Handwerkzeugmaschine nach einem der vorhergehenden Ansprüche, dadurch gekennzeichnet, daß die Dichtringe (22, 23) am Umfang dachförmig geformt sind.

# FIG.1

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 784 396 (SCOTT) <br> * Zusammenfassung; Abbildungen * <br> --- | 1 | B25D17/00 <br> F16J15/06 <br> B25F5/02 |
| A | DE-A-3 610 680 (BOSCH) <br> * Zusammenfassung; Abbildungen * <br> --- | 1 | |
| A,D | DE-A-1 400 490 (ILLINOIS MILLING) <br> * Abbildungen * <br><br> ----- | 1 | |

| | | | RECHERCHIERTE SACHGEBIETE (Int. Cl.5) |
|---|---|---|---|
| | | | B25D <br> F16J <br> B25F |

Der vorliegende Recherchenbericht wurde für alle Patentansprüche erstellt

| Recherchenort | Abschlußdatum der Recherche | Prüfer |
|---|---|---|
| DEN HAAG | 18 MAERZ 1992 | WEIAND T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument